# EUROPÄISCHE PATENTSCHRIFT

(11) **EP 2 582 890 B1**
(45) Veröffentlichungstag und Bekanntmachung des Hinweises auf die Patenterteilung: **15.04.2015**
(21) Anmeldenummer: 11708408.7
(22) Anmeldetag: 11.03.2011
(51) Int. Cl.: E03C 1/08, E03C 1/10, F16L 55/027

(54) **SANITÄRE EINSETZEINHEIT SOWIE BRAUSEARMATUR MIT EINER SANITÄREN EINSETZEINHEIT**
SANITARY INSERTION UNIT AND SHOWER FITTING HAVING A SANITARY INSERTION UNIT
UNITÉ D'INSERTION SANITAIRE ET ACCESSOIRE DE DOUCHETTE POURVU D'UNE UNITÉ D'INSERTION SANITAIRE

(30) Priorität: 16.06.2010 DE 202010009135 U
(43) Veröffentlichungstag der Anmeldung: 24.04.2013
(73) Patentinhaber: Neoperl GmbH, 79379 Müllheim (DE)
(72) Erfinder: SCHNELL, Thomas, CH-4132 Muttenz (CH); STEIN, Alexander, 79241 Ihringen (DE)
(74) Vertreter: Börjes-Pestalozza, Henrich
(86) Internationale Anmeldenummer: PCT/EP2011/001212
(87) Internationale Veröffentlichungsnummer: WO 2011/157309

(56) Entgegenhaltungen:
- WO-A1-2006/126781
- DE-U1-202008 017 031
- GB-A- 213 183
- JP-A- 11 193 559
- US-A- 2 343 774

## Beschreibung

Die vorliegende Erfindung betrifft eine sanitäre Einsetzeinheit, die einen Dichtring aufweist. Die Erfindung befasst sich auch mit einer sanitären Einsetzeinheit, die einen Durchflussmengenregler aufweist oder als Durchflussmengenregler ausgebildet ist. Die vorliegende Erfindung bezieht sich auch auf eine Brausearmatur mit einer sanitären Einsetzeinheit, die einen Durchflussmengenregler und/oder einen Rückflussverhinderer enthält.

Aus Fig. 4 der US 2 343 774 A ist bereits ein gattungsbildender Dichtring vorbekannt, der bis zu einem Ringflansch auf ein Rohrstück aufgeschoben ist. Das Rohrstück, das in das Leitungsende einer sanitären Wasserleitung einsetzbar ist, weist ein Außengewinde auf, auf das ein am Leitungsende zu befestigender Brausekopf aufschraubbar ist. Unmittelbar an den am Rohrstück vorgesehenen Ringflansch schließt sich ein außenumfangsseitig kegelförmiger Spreizring an, der mit seinem sich verjüngenden Endbereich derart in die Ringöffnung des Dichtrings vorsteht, dass der Dichtring aufgespreizt wird, wenn der am Stirnrand des Leitungsendes anliegende Brausekopf zunehmend auf das Außengewinde des Rohrstücks aufgeschraubt und der Ringflansch mit jedem Gewindegang in Richtung zum Brausekopf bewegt wird. Dabei spreizt der Dichtring sich derart auf, dass er reibschlüssig am Innenumfang des Leitungsendes anliegt und den Brausekopf dort festzuhalten vermag.

Aus der DE 20 2008 017 031 der Anmelderin ist bereits eine sanitäre Einsetzeinheit vorbekannt, die als Durchflussmengenregler ausgebildet ist, der einen Drosselkörper aus elastischem Material hat, welcher Drosselkörper im Durchströmkanal eines Reglergehäuses angeordnet ist und zwischen sich und einer, an einer innen- oder außenumfangsseitigen Kanalwandung vorgesehenen Regelprofilierung einen Steuerspalt begrenzt. Dieser Steuerspalt ist in seinem lichten Durchflussquerschnitt in Folge des sich unter dem Druck des durchströmenden Mediums verformenden Drosselkörpers derart verformbar, dass das pro Zeiteinheit durchströmende Wasservolumen unabhängig vom aktuellen Wasserdruck auf einen festgelegten Wert eingeregelt wird. Das Reglergehäuse des vorbekannten Durchflussmengenreglers trägt außenumfangsseitig einen Einspannbereich, der zum Einspannen des vorbekannten Durchflussmengenreglers zwischen zwei miteinander verbundenen Leitungsabschnitten bestimmt ist. Dabei wird dieser Einspannbereich durch die zuund abströmseitige Stirnfläche eines Dichtringes gebildet, in dessen Ringöffnung das Reglergehäuse angeordnet ist. In einem, in den Figuren 7 und 9 der DE 20 2008 017 031 dargestellten Ausführungsbeispiel ist der vorbekannte Durchflussmengenregler in die abströmseitige Überwurfmutter einer flexiblen Schlauchleitung eingelegt, welche Überwurfmutter ihrerseits an den Brauseanschluss einer Handbrause angeschraubt ist. Der vorbekannte Durchflussmengenregler kann somit in den Innengewinden von Überwurfmuttern entweder armaturenabgangsseitig oder schlauchzugangsseitig unverlierbar fixiert werden und vereint die Funktion eines Durchflussmengenreglers und einer Ringdichtung in sich. Es ist ein besonderer Vorteil des vorbekannten Durchflussmengenreglers, dass er auch im Austausch gegen einen ursprünglich vorgesehenen Dichtring verwendet werden kann, ohne dass es zu maßlichen Abweichungen und größeren Spalten in diesem Bereich kommt.

Das vorbekannte und aus dem Durchflussmengenregler sowie der Ringdichtung bestehende Einbauteil kann jedoch allenfalls in der Überwurfmutter einer flexiblen Schlauchleitung während der Lagerung und dem Transport sicher untergebracht werden. Handbrausen, die als Küchen- oder als Duschbrausen verwendbar sind, werden jedoch meist ohne dazugehörigen Brauseschlauch vertrieben. Soll aber eine solche Brausearmatur mit einer, auch einen Durchflussmengenregler umfassenden Ringdichtung vertrieben werden, besteht das Problem, den Durchflussmengenregler dauerhaft an dem Handbrausegriff, der stets mit einem Außengewinde versehen ist, zu fixieren.

Man kennt bereits Durchflussmengenregler, die im Brausegriff durch eine Presspassung fixiert sind, wobei dies voraussetzt, dass die Innenwandung des Brausegriffes mit dem eingesteckten Durchflussmengenregler dicht abschließt, so dass kein By-Pass entsteht. Ferner ist erforderlich, dass ein axialer Anschlag im Brausegriff angeformt ist, da der Betriebsdruck durch den Druckverlust am Durchflussmengenregler eine axiale Kraft auf diesen auswirkt. Diese Kraft muss in der Brausewandung abgefangen werden.

Die auf dem Markt befindlichen Brausegriffe weisen trotz des in der Regel einheitlichen 1/2"-Gewindeanschlusses zum Anschluss des Brauseschlauches jedoch oft unterschiedliche Innendurchmesser im Brausegriff auf, die zudem nach brausespezifischer Herstellung unterschiedlich konisch ausgebildet sind und in der Regel auch keinen axialen Anschlag für einen Durchflussmengenregler oder dergleichen Einbauteil aufweisen.

Es besteht daher insbesondere die Aufgabe, eine sanitäre Einsetzeinheit zu schaffen, die dauerhaft, aber dennoch leicht lösbar an einem Leitungsabschnitt befestigt werden kann, wobei die erfindungsgemäße Einsetzeinheit auch bei verschiedenen Leitungsabschnitten mit unterschiedlichen Durchmessern verwendbar sein soll. Schließlich besteht auch die Aufgabe, eine Brausearmatur zu schaffen, an deren als Brauseanschluss ausgestalteten Leitungsabschnitt eine sanitäre Einsetzeinheit dauerhaft, aber dennoch leicht lösbar befestigt werden kann.

Die erfindungsgemäße Lösung dieser Aufgabe besteht bei der sanitären Einsetzeinheit der eingangs erwähnten Art in den Merkmalen des geltenden Anspruchs 1.

Die vorliegende Erfindung ermöglicht es, einen Dichtring oder einen Dichtring mit integriertem Durchflussmengenregler und/oder Rückflussverhinderer in einer Vielzahl von unterschiedlich gestalteten Brausegriffen unverlierbar zu fixieren, ohne dass besondere Anforderungen an die Gestaltung oder die Maßhaltigkeit dieser Brausegriffe gestellt werden müssten.

Die erfindungsgemäße Einsetzeinheit weist einen Dichtring auf, der dazu einen hülsenförmigen Fortsatz hat, welcher Fortsatz an seinem freien Endbereich einen umfangsseitig überstehenden Kopf aus elastischem Material trägt, der beim Einsetzen des Fortsatzes in den lichten Leitungsinnenraum des dem Fortsatz zugeordneten Leitungsabschnittes zumindest bereichsweise derart verformbar ist, dass sich der Kopf des Fortsatzes an die den lichten Leitungsinnenraum des Leitungsabschnitts umgrenzende Innenumfangswandung anlegt. Da der am Dichtring vorgesehene Fortsatz mit seinem umfangsseitig überstehenden Kopf sich an die den lichten Leitungsinnenraum des Leitungsabschnitts umgrenzende Innenumfangswandung anlegt, wird der Fortsatz und mit ihm auch der Dichtring dauerhaft am Leitungsanschluss gehalten, um zu gegebener Zeit diesen Leitungsabschnitt mit einem anderen Leitungsabschnitt zu einer insoweit durchgehenden Leitung verbinden zu können. Der in den Brausegriff hineinragende Fortsatz des Dichtringes, in den beispielsweise ein Mengenregler eingespritzt beziehungsweise ein Mengenregler und/oder ein Rückflussverhinderer montiert sein kann, kann durch Reib- und/oder Formschluss des sich auf die Innenwandung des Brausegriffes anpassenden Durchmessers und der sich aus der Elastizität ergebenden Rückstellkräfte gehalten werden.

Der feste Halt des Dichtrings während des Transports und der Lagerung des ihn tragenden Leitungsabschnitts wird begünstigt, wenn sich der Kopf des Fortsatzes an die Innenumfangswandung reibschlüssig anlegt.

Eine bevorzugte Ausführungsform gemäß der Erfindung sieht vor, dass der Fortsatz an den Dichtring einstückig angeformt ist. Ist der Fortsatz an den Dichtring einstückig angeformt, können der Dichtring und der Fortsatz mit samt dem Kopf aus demselben elastischen Material hergestellt werden.

Der Dichtring kann beidseits von den Umfangsrändern der miteinander zu verbindenden Leitungsabschnitte beaufschlagt werden, wenn der Fortsatz an den die Ringöffnung umgrenzenden Innenumfangsrandbereich des Dichtrings einstückig angeformt ist. Auf diese Weise stehen die Stirnflächen des Dichtrings beidseits der Beaufschlagung die Stirnumfangsränder der Leitungsabschnitte zur Verfügung.

Damit sich der am Fortsatz vorgesehene Kopf besonders gut an den lichten Leitungsinnenraum eines dem Fortsatz zugeordneten Leitungsabschnitts anformen kann und damit sich der Kopf des Fortsatzes auch an unterschiedlich dimensionierte Leitungsinnenräume anpassen kann, ist es vorteilhaft, wenn der Kopf des Fortsatzes beim Einsetzen des Fortsatzes in den lichten Leitungsinnenraum im Bereich seines umfangseitig überstehenden Kopfteilbereiches verformbar ist.

Eine Ausführungsform gemäß der Erfindung sieht vor, dass der Fortsatz hohlnietförmig ausgestaltet ist und an seinem freien Endbereich einen umfangsseitig flanschartig überstehenden Kopf aus elastischem Material trägt.

Eine bevorzugte Ausführungsform gemäß der Erfindung sieht jedoch vor, dass der Kopf durch zumindest zwei, in Umfangsrichtung vorhandener beabstandete und in Einsetzrichtung orientierte Flügel oder Rippen aus elastischem Material gebildet ist, die sich beim Einsetzen des Fortsatzes derart verbiegen, dass sich der Kopf mit seinen Flügeln oder Rippen an die den lichten Leitungsinnenraum des Leitungsabschnitts umgrenzende Innenumfangswandung anlegt. Ein durch voneinander beabstandete und in Einsetzrichtung orientierte Flügel oder Rippen gebildeter Kopf kann sich leicht auch an die unterschiedlichen lichten Querschnitte verschiedener Leitungsinnenräume anpassen, wobei stets ein fester Halt des Fortsatzes im Leitungsinnenraum gewährleistet ist.

Um den Fortsatz trotz seines umfangsseitig überstehenden Kopfes leicht in den Leitungsinnenraum eines zugeordneten Leitungsabschnittes einformen oder einsetzen zu können, ist es zweckmäßig, wenn die Flügel oder Rippen in Umfangsrichtung des Fortsatzes vorzugsweise gleichsinnig und insbesondere schaufelradartig gebogen sind. Ein Fortsatz, bei dem der Kopf durch schaufelradartig gebogene Rippen oder Stege gebildet ist, lässt sich leicht in den lichten Leitungsinnenraum eines zugeordneten Leitungsabschnitts eindrehen, wobei ein reibschlüssiges Anlegen der den Kopf bildenden Stege oder Rippen an die den lichten Leitungsinnenraum umgrenzende Innenumfangswandung begünstigt wird.

Das Einsetzen des über den Fortsatz umfangsseitig überstehenden Kopfes wird begünstigt, wenn sich der Kopf in Einsetzrichtung erweitert.

Eine Weiterbildung gemäß der Erfindung von eigener schutzwürdiger Bedeutung sieht vor, dass im Durchtrittskanal und insbesondere in der Ringöffnung des Dichtrings ein Durchflussmengenregler mit zumindest einem Drosselkörper aus elastisch verformbarem Material vorgesehen ist, der im Durchströmkanal eines Reglergehäuses angeordnet ist und zwischen sich und einer, an einer innen- oder außenumfangsseitigen Kanalwandung vorgesehenen Regelprofilierung einen Steuerspalt begrenzt, welcher Steuerspalt in seinem lichten Durchflussquerschnitt in Folge des sich unter dem Druck des durchströmenden Mediums verformbaren Drosselkörpers veränderbar ist.

Möglich ist aber auch, dass im Durchtrittskanal ein Rückflussverhinderer mit einem Ventilkörper vorgesehen ist, welcher Ventilkörper von dem in Durchströmrichtung des Rückflussverhinderers durchströmenden Fluid aus einer Schließstellung gegen eine Rückstellkraft in eine Offenstellung bewegbar ist. Mit Hilfe eines solchen Rückflussverhinders kann beispielsweise ein Wasserzulauf gegen rückdrückendes oder rücksaugendes kontaminiertes Wasser gesichert werden.

Eine einfache und vorteilhafte Ausführungsform gemäß der Erfindung sieht vor, dass der Durchtrittskanal in einem Teilbereich als Aufnahmehöhlung zur Aufnahme eines Rückflussverhinderers und/oder eines Durchflussmengenreglers ausgestaltet ist.

Dabei kann es vorteilhaft sein, wenn der in der Aufnahmehöhlung befindliche Rückflussverhinderer und/oder Durchflussmengenregler in axialer Richtung mittels eines Sicherungsringes oder mittels eines Durchflussmengenreglers gesichert ist, der in der Ringöffnung des Dichtringes gehalten ist. Dazu kann der Dichtring im Bereich seiner Ringöffnung innenseitig eine Ringnut tragen, in welcher der Sicherungsring oder der gegebenenfalls scheibenförmig ausgebildete Durchflussmengenregler formschlüssig eingreift.

Eine weitere erfindungsgemäße Lösung der oben gestellten Aufgabe, bei welcher die sanitäre Einsetzeinheit als Durchflussmengenregler ausgebildet ist oder einen Durchflussmengenregler aufweist, sieht vor, dass der Durchflussmengenregler einen hülsenförmigen Fortsatz trägt, dessen am freien Endbereich des Fortsatzes umfangsseitig überstehender und aus elastischem Material hergestellter Kopf beim Einsetzen des Fortsatzes in den lichten Leitungsinnenraum eines dem Fortsatz zugeordneten Leitungsabschnitts zumindest bereichsweise derart verformbar ist, dass sich der Kopf des Fortsatzes an die den lichten Leitungsinnenraum des Leitungsabschnitts umgrenzende Innenumfangswandung anlegt und dass der Hülseninnenraum des Fortsatzes mit dem Durchströmkanal des Durchflussmengenreglers verbunden ist.

Bei dieser erfindungsgemäßen Einsetzeinheit trägt der Durchflussmengenregler einen hülsenförmigen Fortsatz, der in die Leitungsöffnung eines dem Fortsatz zugeordneten Leitungsabschnitts und beispielsweise in die Leitungsöffnung am Brauseanschluss einer Brausearmatur eingeführt werden kann. Dabei ist am freien Endbereich des Fortsatzes ein umfangsseitig überstehender und aus elastischem Material hergestellter Kopf vorgesehen. Da der am freien Endbereich des Fortsatzes vorgesehene Kopf sich mit seinem über den Fortsatz überstehenden Umfangsrandbereich reibschlüssig an die Innenumfangswandung des Leitungsabschnitts anlegen kann, lässt sich der den Kopf tragende Fortsatz derart in die Leitungsöffnung einführen, dass der Durchflussmengenregler nahezu unverlierbar mit dem Leitungsabschnitt und insbesondere der den Leitungsabschnitt umfassenden Brausearmatur verbunden werden kann. Da der aus elastischem Material hergestellte Kopf sich an den dichten Leitungsquerschnitt des Leitungsabschnitts gut anpassen kann, ist der erfindungsgemäße Durchflussmengenregler auch bei verschiedenen Brausearmaturen mit unterschiedlichem lichten Leitungsquerschnitt verwendbar.

Dabei sieht eine bevorzugte Ausführungsform gemäß der Erfindung vor, dass das Reglergehäuse in der Ringöffnung eines Dichtrings angeordnet ist, dessen zu- und abströmseitige Stirnfläche den Einspannrandbereich bilden und dass der Dichtring mit dem hohlnietförmigen Fortsatz einstückig verbunden ist.

Die Montage und das Einsetzen des Fortsatzes wird wesentlich erleichtert, wenn der hohlnietförmige Fortsatz sich zu seinem den Kopf tragenden freien Endbereich hin verjüngt.

Ein bevorzugter Anwendungsbereich sieht vor, dass der Leitungsanschluss ein zu einem Brausekopf führender Bestandteil einer Brausearmatur und insbesondere einer Handbrause ist.

Die nachfolgend dargestellten Ausführungsbeispiele sind sowohl bei einer als Durchflussmengenregler ausgebildeten Einsetzeinheit als auch bei einer einen Dichtring aufweisenden Einsetzeinheit einsetzbar. So sieht eine weiterbildende Ausführungsform gemäß der Erfindung vor, den Dichtring und das Reglergehäuse zu umspritzen beziehungsweise diese Bauteile in einem Zwei- oder Mehrkomponenten-Spritzgussverfahren herzustellen. Dabei besteht eine bevorzugte Ausführungsform gemäß der Erfindung darin, dass der Dichtring als Umspritzung des Reglergehäuses ausgestaltet ist und/oder dass das Reglergehäuse und der mit ihm verbundene Dichtring als Mehrkomponenten-Spritzgussteil ausgestaltet sind. Da bei dieser Ausführungsform weitere Verfahrensschritte zur Montage von Reglergehäuse und Dichtring vermeidbar sind, zeichnet sich diese Ausführungsform durch eine einfache und kostengünstige Herstellung aus.

Dabei wird eine feste und unlösbare Verbindung zwischen dem Reglergehäuse und dem Dichtring noch zusätzlich begünstigt, wenn das Reglergehäuse zumindest eine, vorzugsweise in Längsrichtung orientierte Durchgriffsöffnung hat, die von dem Dichtungsmaterial des Dichtringes durchsetzt ist.

Da das Reglergehäuse und der Dichtring zueinander komplementäre Außen- oder Umfangskonturen haben, sind diese Bestandteile regelmäßig formschlüssig miteinander verbunden. Zusätzlich oder stattdessen kann es sinnvoll sein, wenn das Reglergehäuse und der Dichtring über Reib-, Klebe- oder Stoffschluss oder eine Auswahl dieser Verbindungsarten miteinander verbunden sind.

Um den Dichtring aus Gummi oder einem anderen dichtend-nachgiebigen Material und das Reglergehäuse aus einem demgegenüber härteren Material kostengünstig herstellen zu können, ist es aber auch möglich, wenn das Reglergehäuse in der Ringöffnung des Dichtrings lösbar verbindbar und vorzugsweise lösbar verrastbar ist. Bei dieser Ausführungsform kann der Dichtring mit dem Fortsatz aus elastischem Material hergestellt werden, während das Reglergehäuse demgegenüber aus einem formbeständigen Material herstellbar ist.

Um das Reglergehäuse des Durchflussmengenreglers und den Dichtring fest, aber dennoch leicht lösbar miteinander verbinden zu können, kann es zweckmäßig sein, wenn an dem die Ringöffnung begrenzenden Ringinnenumfang zumindest eine Rastnut oder dergleichen Rastmittel vorgesehen ist, das mit wenigstens einem Rastvorsprung oder dergleichen Gegenrastmittel am Gehäuseaußenumfang des Reglergehäuses lösbar verrastbar ist.

Ist das Reglergehäuse mit dem Dichtring lösbar verbunden, kann es zweckmäßig sein, wenn das Reglergehäuse von der Zuströmseite oder der Abströmseite aus bis zu einem radial nach innen vorstehenden Absatz des Dichtringes in dessen Ringöffnung einsetzbar ist.

Die Montage wird erleichtert, wenn das Reglergehäuse in der Ringöffnung des Dichtringes versenkbar ist.

Um den Durchflussmengenregler vor den im Fluid mitgeführten Schmutzpartikeln zu schützen, kann es zweckmäßig sein, wenn dem Durchflussmengenregler ein Vorsatzsieb zuströmseitig vorgeschaltet ist, das mit einem in Zuströmrichtung sich vorzugsweise konisch verjüngenden Zentralbereich über die Außenkontur von Reglergehäuse und Dichtring vorsteht.

Weitere Merkmale gemäß der Erfindung ergeben sich aus der nachfolgenden Figurenbeschreibung in Verbindung mit den Ansprüchen. Nachstehend werden bevorzugte Ausführungsbeispiele anhand der Zeichnung noch näher erläutert.

Es zeigt:
- Fig. 1: eine als Hand- oder Duschbrause ausgestaltete Brausearmatur, die im Bereich ihres teilweise längsgeschnittenen Brauseanschlusses einen, ein Außengewinde tragenden Leitungsabschnitt hat, in dessen lichten Leitungsinnenraum ein mit einem Dichtring einstückig verbundener Fortsatz eingeführt ist, wobei der Dichtring hier in seiner Ringöffnung einen Durchflussmengenregler trägt,
- Fig. 2: die Hand- oder Duschbrause aus Figur 1 in einem Detail-Längsschnitt im Bereich ihres Brauseanschlusses,
- Fig. 3: den in einem Leitungsabschnitt mit einem größeren lichten Leitungsdurchmesser befindlichen Dichtring aus Figur 1 und 2 in einem Längsschnitt,
- Fig. 4: den in einem Leitungsabschnitt mit einem demgegenüber kleineren lichten Leitungsdurchmesser befindlichen Dichtring aus Figur 1 bis 3 in einem Längsschnitt,
- Fig. 5: einen Dichtring in einem Längsschnitt, an den ein hohlnietförmiger Fortsatz einstückig angeformt ist, an dessen freien Endbereich ein über den Fortsatz umfangsseitig vorstehender tellerförmiger Kopf vorgesehen ist,
- Fig. 6: den Dichtring aus Figur 7 in einer Draufsicht auf die dem Fortsatz abgewandte Flachseite,
- Fig. 7: einen mit dem Dichtring aus Figur 5 und 6 vergleichbaren Dichtring in einem Längsschnitt, wobei in der Ringöffnung des Dichtrings eine Rastnut vorgesehen ist, in die bei Bedarf ein scheibenförmiger Durchflussmengenregler einsetzbar ist,
- Fig. 8: den Dichtring aus Figur 7 in einer Draufsicht auf die dem Fortsatz abgewandte Flachseite,
- Fig. 9: den Dichtring aus Figur 7 und 8, wobei in die in der Ringöffnung des Dichtrings vorgesehene Rastnut ein scheibenförmiger Durchflussmengenregler eingesetzt ist,
- Fig. 10: den Dichtring aus Figur 7 in einer Draufsicht auf die dem Fortsatz abgewandte Flachseite,
- Fig. 11: einen Dichtring mit einem einstückig verbundenen Fortsatz, welcher Fortsatz an seinem Kopf mehrere, in Umfangsrichtung gleichmäßig voneinander beabstandete Flügel oder Rippen aus elastischem Material trägt, die sich beim Einsetzen des Fortsatzes in einen Leitungsabschnitt derart verbiegen, dass sich der Kopf des Fortsatzes mit den Flügeln oder Rippen an die den lichten Leitungsinnenraum des Leitungsabschnitts umgrenzende Innenumfangswandung anlegt, wobei der Dichtring und der damit verbundene Fortsatz in einer abströmseitigen Draufsicht dargestellt sind,
- Fig. 12: den Dichtring und den damit verbundenen Fortsatz aus Fig. 11 in einer Seitenansicht,
- Fig. 13: den Dichtring und den damit verbundenen Fortsatz aus Fig. 11 und 12 in einem Längsschnitt durch Schnittebene XIII - XIII aus Fig. 12,
- Fig. 14: den Dichtring und den Fortsatz aus Fig. 11 bis 13 in einer perspektivischen Draufsicht auf die Zuströmseite,
- Fig. 15: den Dichtring und den Fortsatz aus Fig. 11 bis 14 in einer perspektivischen Draufsicht auf die Abströmseite,
- Fig. 16: den Dichtring und den Fortsatz aus Fig. 11 bis 15 in einer Draufsicht auf die Zuströmseite,
- Fig. 17: eine Handbrause, die in ihrem zuströmseitigen Brauseanschluss eine Einsetzöffnung zum Einsetzen eines, mit einem Dichtring verbundenen Fortsatzes aufweist,
- Fig. 18: die Handbrause aus Fig. 17 in einem Querschnitt durch Schnittebene XVIII - XVIII, wobei Fig. 18 die Handbrause in einem Querschnitt durch ihren, den Fortsatz in sich aufnehmenden Brauseanschluss zeigt,
- Fig. 19: eine mit Fig. 17 vergleichbare Handbrause, die im Bereich ihrer im Brauseanschluss vorgesehenen Einsetzöffnung einen kleineren lichten Öffnungsquerschnitt hat,
- Fig. 20: die Handbrause aus Fig. 19 in einer Querschnittsdarstellung im Bereich der Schnittebene XX - XX in Fig. 19, wobei gut zu erkennen ist, sich der mit dem Dichtring verbundene Fortsatz auch an diesen kleineren lichten Querschnitt anpasst,
- Fig. 21: einen, mit einem hülsenförmigen Fortsatz verbundenen Dichtring in einer Draufsicht auf seine Abströmstirnseite, wobei auf einer Seite des beidseits offenen Durchtrittskanals von Dichtring und Fortsatz eine Aufnahmehöhlung zur Aufnahme einer beispielsweise als Durchflussmengenregler und/oder als Rückflussverhinderer ausgestalteten Einsetzpatrone vorgesehen ist,
- Fig. 22: das sanitäre Bau- oder Einsetzteil aus Fig. 21 in einer Seitenansicht,
- Fig. 23: das sanitäre Bau- oder Einsetzteil aus den Fig. 21 und 22 in einer Draufsicht aus seine Zuströmstirnseite,
- Fig. 24: das sanitäre Bau- oder Einsetzteil aus den Fig. 21 bis 23 in einem Längsschnitt durch Schnittebene XXIV - XXIV in Fig. 22,
- Fig. 25: das sanitäre Bau- oder Einsetzteil aus den Fig. 21 bis 24 in einer perspektivischen Draufsicht auf seine Zuströmseite,
- Fig. 26: das sanitäre Bau- oder Einsetzteil aus den Fig. 21 bis 25 in einer perspektivischen Draufsicht auf seine Abströmseite,
- Fig. 27: ein mit Fig. 21 bis 26 vergleichbar ausgestaltetes und aus Dichtring, Fortsatz und Einsetzpatrone bestehendes Bauteil oder Einsetzteil in einer Draufsicht auf seine Zuströmstirnseite, wobei der Fortsatz hier zwei Teilbereiche gegebenenfalls auch mit unterschiedlichem Außenumfang haben kann, von denen der eine, an den Dichtring angrenzende Teilbereich die zur Aufnahme der Einsetzpatrone bestimmte Aufnahmehöhlung aufweist, während der andere, den freien Endbereich des Fortsatzes bildende Teilbereich einen aus voneinander beabstandeten Flügel oder Rippen gebildeten Kopf trägt,
- Fig. 28: das sanitäre Bau- oder Einsetzteil aus Fig. 27 in einer Seitenansicht,
- Fig. 29: das sanitäre Bau- oder Einsetzteil aus Fig. 27 und 28 in einem Längsschnitt in Schnittebene XXIX - XXIX gemäß Fig. 28,
- Fig. 30: das sanitäre Bau- oder Einsetzteil aus den Fig. 27 bis 29 in einer perspektivischen Draufsicht auf seine Abströmseite,
- Fig. 31: das sanitäre Bau- oder Einsetzteil aus den Fig. 27 bis 30 in einer perspektivischen Draufsicht auf seine Zuströmseite,
- Fig. 32: das sanitäre Bau- oder Einsetzteil aus den Fig. 27 bis 31 in einer Draufsicht auf seine Abströmseite, und
- Fig. 33: eine mit Fig. 29 vergleichbar ausgestaltete sanitäre Einsetzeinheit in einem Längsschnitt, die einen Dichtring mit angeformtem Fortsatz sowie eine beispielsweise als Rückflussverhinderer ausgebildete Einsetzpatrone aufweist, welche Einsetzpatrone in eine, im Fortsatz vorgesehene Aufnahmehöhlung eingesetzt und dort mittels eines scheibenförmigen Durchflussmengenreglers gesichert ist, der praktisch einen Sicherungsring bildet oder ersetzt.

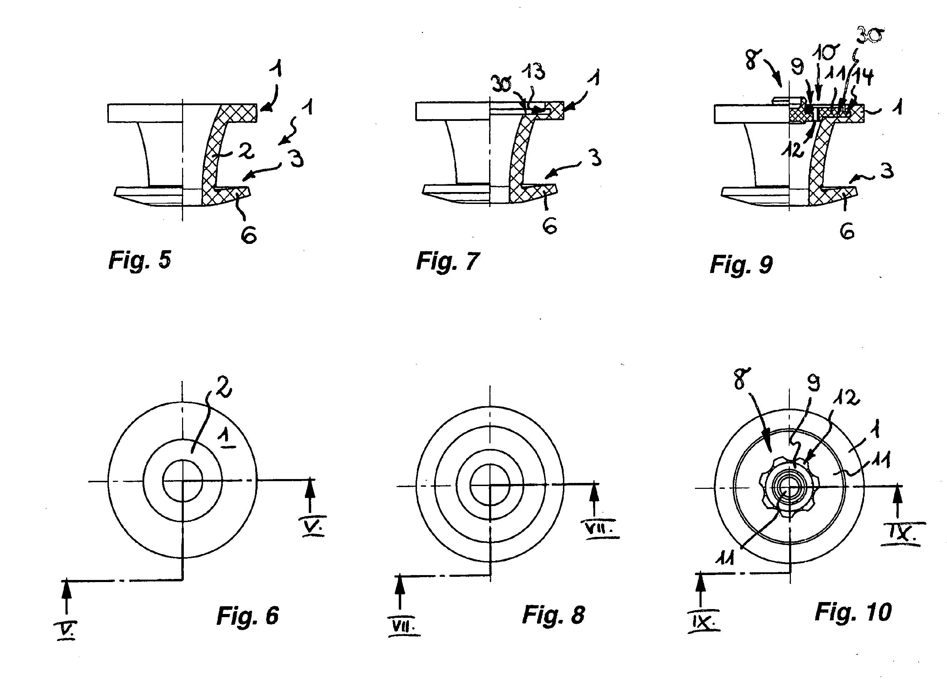

In den Figuren 5 bis 10 sind verschiedene Ausführungen eines Dichtringes 1 dargestellt. Dieser Dichtring 1 ist Bestandteil einer sanitären Einsetzeinheit, die einen hülsenförmigen Fortsatz 2 hat, der an seinem freien Endbereich einen umfangsseitig überstehenden Kopf 3 trägt. Der Fortsatz 2 ist an den die Ringöffnung umgrenzenden Innenumfangsrandbereich des Dichtringes 1 einstückig angeformt und hier aus demselben elastischen Material hergestellt.

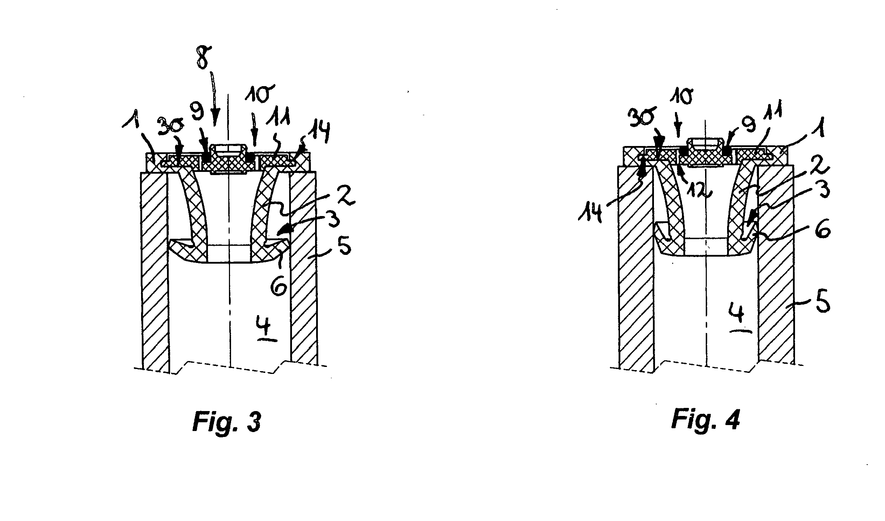

Wie aus den Figuren 3 und 4 deutlich wird, kann der am Dichtring 1 vorgesehene Fortsatz 2 in den lichten Leitungsinnenraum 4 eines dem Fortsatz 2 zugeordneten Leitungsabschnitts 5 eingesetzt werden. Dabei ist der am Fortsatz 2 endseitig vorgesehene Kopf 3 zumindest in seinem über den Fortsatz 2 umfangsseitig überstehenden Umfangsrandbereich 6 derart elastisch verformbar, dass sich der Kopf 3 des Fortsatzes 2 an die den lichten Leitungsinnenraum 4 des Leitungsabschnitts 5 umgrenzende Innenumfangswandung vorzugsweise reibschlüssig anliegt.

Dank seines Fortsatzes 2 kann der Dichtring 1 während der Lagerung und dem Transport dauerhaft und sicher auch an einem solchen Leitungsabschnitt 5 gehalten werden, der - wie beispielsweise der Brausegriff einer Hand- oder Duschbrause - lediglich ein Außengewinde 7 trägt.

Da der am Dichtring 1 vorgesehene Fortsatz 2 mit seinem umfangsseitig überstehenden Kopf 3 sich an die den lichten Leitungsinnenraum 4 des Leitungsabschnitt 5 umgrenzende Innenumfangswandung anlegt, wird der Fortsatz 2 und mit ihm auch der Dichtring 1 dauerhaft im Leitungsanschluss gehalten, um zu gegebener Zeit, wenn der Leitungsabschnitt 5 mit einem anderen Leitungsabschnitt zu einer insoweit durchgehenden Leitung verbunden werden soll, die Kupplungs- und Trennstelle zwischen den miteinander verbundenen Leitungsabschnitten abzudichten. Da der Innenraum des hohlnietförmig ausgebildeten Fortsatzes 2 und die Ringöffnung des Dichtrings 1 einen beidseits offenen Durchtrittskanal bilden, lassen sich die Leitungsabschnitte zu einer durchgehenden und auch in diesem Bereich dichten Leitung verbinden.

Aus einem Vergleich der Figuren 5 bis 10 wird deutlich, dass der Fortsatz 2 an den die Ringöffnung umgrenzenden Innenumfangsrandbereich des Dichtrings 1 einstückig angeformt ist. Somit stehen die zu- und die abströmseitige Stirnfläche des Dichtrings 1 zur Verfügung, um zwischen den Stirnumfangsrändern zweier miteinander verbundener Leitungsabschnitte eingespannt zu werden.

In Figur 9 und 10 ist der Dichtring in einem weiterbildenden Ausführungsbeispiel gezeigt, bei dem in der Ringöffnung des Dichtrings ein hier scheibenförmig ausgestalteter Durchflussmengenregler 8 vorgesehen ist. Die aus dem Dichtring 1 und dem Durchflussmengenregler 8 gebildete Einheit stellt einen Durchflussmengenregler dar, mit dem das durch die Leitung pro Zeiteinheit durchströmende Volumen des Fluids druckunabhängig auf einen festgelegten Wert eingeregelt werden kann. Der Durchflussmengenregler 8 weist dazu einen Drosselkörper 9 aus elastisch verformbarem Material auf, der in einem Durchströmkanal 10 eines Reglergehäuses 11 angeordnet ist. Der Drosselkörper 9 begrenzt zwischen sich und einer, an einer innenumfangsseitigen Kanalwandung vorgesehenen Regelprofilierung 11 einen Steuerspalt 12, welcher Steuerspalt 12 in seinem lichten Durchflussquerschnitt in Folge des sich unter dem Druck des durchströmenden Mediums verformbaren Drosselkörpers 9 veränderbar ist. Dabei sind die an der innenumfangsseitigen Kanalwandung vorgesehene Regelprofilierung 11 aus in Durchströmrichtung orientierten Ein- und Ausformungen der Kanalwandung gebildet.

Am Reglergehäuse 11 des Durchflussmengenreglers 8 ist außenumfangsseitig ein Einspannbereich vorgesehen, der zum Einspannen des Durchflussmengenreglers 8 zwischen zwei miteinander verbundenen Leitungsabschnitten dient. Dieser Einspannbereich wird durch die zu- und die abströmseitige Stirnfläche des Dichtringes 1 gebildet. Aus einem Vergleich der Figuren 7 und 8 einerseits, die den dem Durchflussmengenregler 8 zugeordneten Dichtring 1 für sich allein zeigen, und den Figuren 9 und 10 andererseits, wird deutlich, dass das Reglergehäuse 11 in der Ringöffnung des Dichtrings 1 lösbar und insbesondere lösbar verrastbar gehalten ist. Dazu ist an dem die Ringöffnung begrenzenden Ringinnenumfang eine Rastnut 13 vorgesehen, die mit einem flanschartig ausgestalteten und umlaufenden Rastvorsprung 14 am Gehäuseaußenumfang des Reglergehäuses 11 lösbar verrastbar ist.

Das Reglergehäuse 11 ist hier von der Zuströmseite des Dichtringes 1 aus bis zu einem radial nach innen vorstehenden Absatz 15 des Dichtringes 1 in dessen Ringöffnung einsetzbar. Dabei ist das Reglergehäuse 11 in der Ringöffnung des Dichtringes 1 versenkbar. Um den Durchflussmengenregler 8 vor den im Fluid eventuell mitgeführten Schmutzpartikeln zu schützen, kann es zweckmäßig sein, wenn ein hier nicht dargestelltes Vorsatzsieb zuströmseitig vorgeschaltet ist, das mit einem in Zuströmrichtung sich insbesondere konisch verjüngenden Zentralbereich auch über die Außenkontur von Reglergehäuse 11 und Dichtring 1 vorstehen kann.

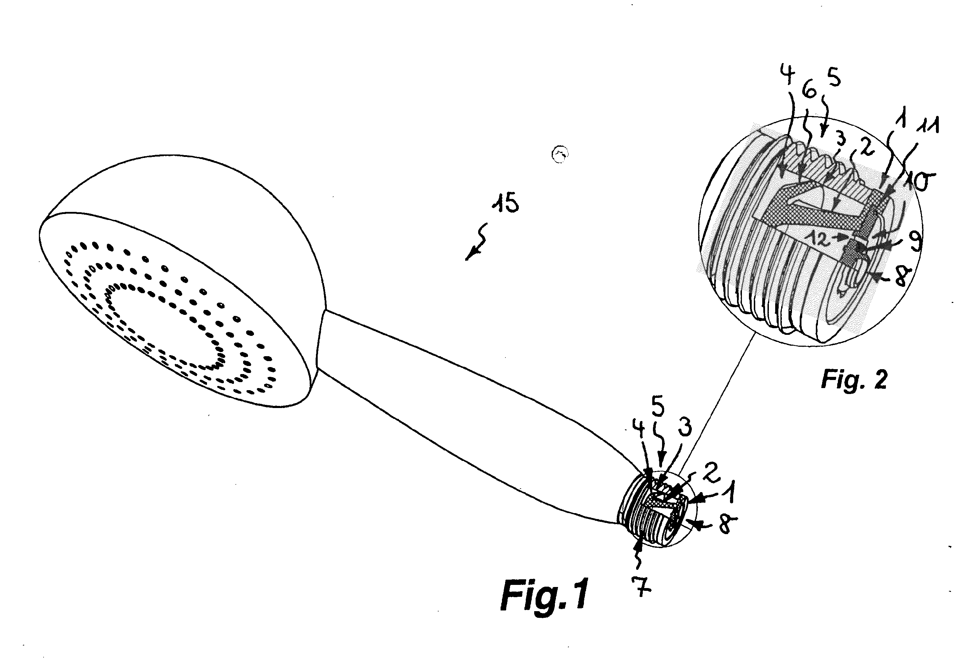

In den Figuren 1 und 2 ist die aus Dichtring 1 und Durchflussmengenregler 8 bestehende Einheit aus Figur 9 und 10 in einem bevorzugten Anwendungsbeispiel gezeigt. Die Figuren 1 und 2 zeigen eine Hand- oder Duschbrause 15, die im Bereich ihres Brause-Griffstückes 16 einen als Brauseanschluss ausgebildeten und außenumfangsseitig mit einem Außengewinde 7 ausgestatteten Leitungsabschnitt 5 hat. An den als Brauseanschluss ausgestalteten Leitungsabschnitt 5 ist die Handbrause 15 mit einem hier nicht weiter dargestellten und als flexibler Brauseschlauch ausgestalteten Leitungsabschnitt zu einer durchgehend dichten wasserführenden Leitung verbunden. An dem als flexibler Brauseschlauch ausgebildeten Leitungsabschnitt 5 ist eine Überwurfmutter mit Innengewinde vorgesehen, welches Innengewinde mit dem Außengewinde 7 am Leitungsabschnitt 5 lösbar verschraubbar ist. Um die Leitungsabschnitte 5 im Bereich dieser Kupplungs- oder Trennstelle zu einer dichten Leitung miteinander verbinden zu können, ist zwischen den Leitungsabschnitten 5 der Dichtring 1 eingespannt. Dabei ist der an der abströmseitigen Stirnseite des Dichtringes 1 vorstehende hülsenförmige Fortsatz 2 in den lichten Leitungsinnenraum 4 des Leitungsabschnitts 5 eingesetzt. Aus dem Detail-Längsschnitt in Figur 2 wird deutlich, dass der an dem freien Endbereich des Fortsatzes 2 umfangsseitig überstehende und aus elastischem Material bestehende Kopf 3 sich beim Einsetzen des Fortsatzes 2 in den Leitungsinnenraum 4 derart verformt hat, dass sich der Kopf 3 des Fortsatzes 2 an die den lichten Leitungsinnenraum 4 umgrenzende Innenumfangswandung anlegt. Da der Hülseninnenraum des hülsenförmigen Fortsatzes 2 und die Ringöffnung des Dichtringes 1 einen beidseits offenen Durchtrittskanal bilden, kann das Wasser die mittels dem Dichtring 1 nach außen hin abgedichtete Kupplungs- oder Trennstelle zwischen den miteinander verbundenen Leitungsabschnitten passieren.

Im Durchtrittskanal und hier speziell in der Ringöffnung des Dichtringes 1 ist der Durchflussmengenregler 8 vorgesehen, der das pro Zeiteinheit aus der Handbrause 15 ausströmende Wasservolumen unabhängig von dem eventuell auch schwankenden Wasserdruck vergleichmäßigen und auf einen festgelegten Maximalwert einregeln soll.

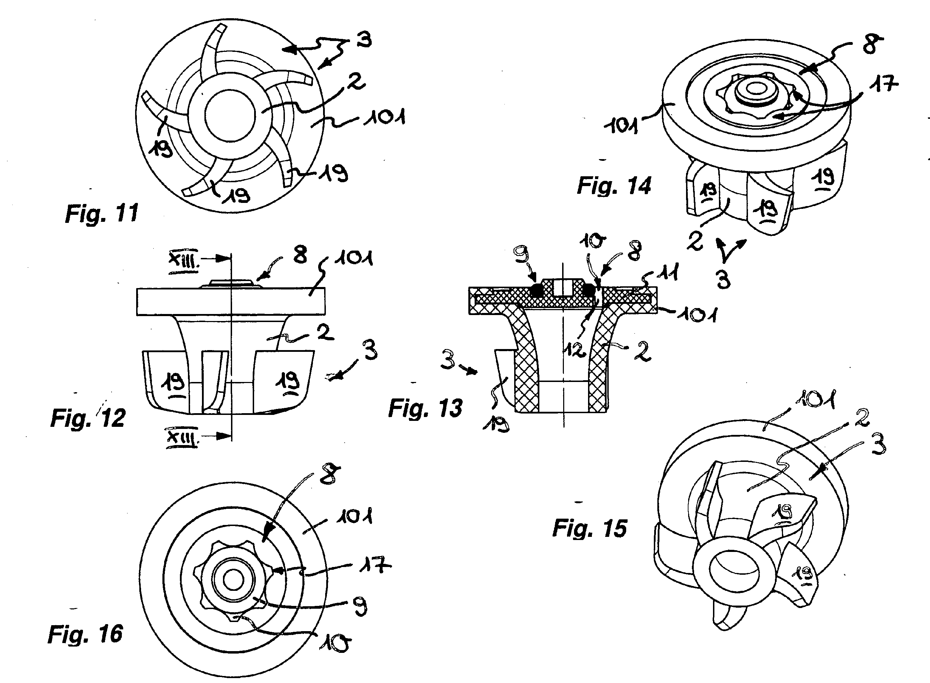

In den Figuren 11 bis 16 ist ein Dichtring 101 dargestellt, der ebenfalls mit einem Fortsatz 2 einstückig verbunden ist. Der Fortsatz 2 hat an seinem Kopf 3, der an dem freien, dem Dichtring 101 abgewandten Endbereich des Fortsatzes 2 vorgesehen ist, zumindest zwei und hier fünf voneinander beabstandete Flügel oder Rippen 19, die in Einsetzrichtung des Fortsatzes 2 orieniert sind und aus elastischem Material bestehen. Die aus elastischem Material bestehenden Flügel oder Rippen 19 können sich beim Einsetzen des Fortsatzes 2 in den lichten Leitungsinnenraum eines dem Fortsatzes zugeordneten Leitungsabschnitts derart verbiegen, dass sich der Kopf 3 mit seinen Flügeln oder Rippen 19 an die den lichten Leitungsinnenraum des Leitungsabschnitts umgrenzende Innenumfangswandung anlegt.

Aus den Figuren 11, 12, 14 und 15 ist erkennbar, dass die am Fortsatz 2 als Kopf 3 vorstehenden Flügel oder Rippen 19 in Umfangsrichtung des Fortsatzes 2 gleichsinnig und insbesondere schaufelradartig gebogen sind. Die schaufelradartige Ausgestaltung der Flügel oder Rippen 19 gibt eine bevorzugte Drehrichtung vor, mit welcher der Fortsatz 2 in den lichten Leitungsinnenraum des zugeordneten Leitungsabschnitts eingesetzt und insbesondere eingedreht werden kann.

In den Figuren 12, 13 und 15 ist besonders gut erkennbar, dass sich der Kopf 3 in Einsetzrichtung erweitert, sodass der Kopf mit einem, einen kleineren Querschnitt aufweisenden Teil- oder Endbereich an dem Leitungsinnenraum des Leitungsabschnitts angesetzt werden kann.

Auch der Dichtring 101 gemäß den Figuren 11 bis 15 weist im Durchtrittskanal und insbesondere in seiner Ringöffnung einen Durchflussmengenregler 8 auf. Der Durchflussmengenregler 8 hat einen Drosselkörper 9 aus elastisch verformbarem Material, der im Durchströmkanal 10 des Reglergehäuses 11 angeordnet ist und zwischen sich und einer, an einer innen- oder außenumfangsseitigen Kanalwandung vorgesehenen Regelprofilierung 17 einen Steuerspalt 12 begrenzt, welcher Steuerspalt in seinem lichten Durchflussquerschnitt in Folge des sich unter dem Druck des durchströmenden Mediums verformbaren Drosselkörpers 9 veränderbar ist.

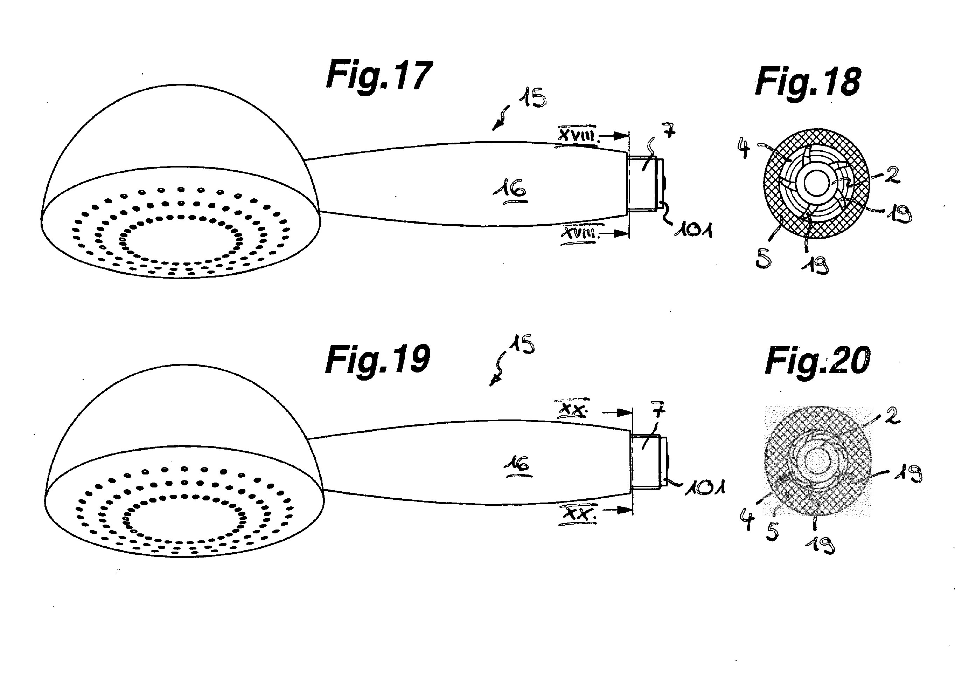

In den Figuren 17 bis 20 ist das aus Dichtring 102, Fortsatz 2 und Durchflussmengenregler 8 bestehende sanitäre Bauteil in zwei Anwendungsbeispielen gezeigt. In den Figuren 17 und 18 einerseits und den Figuren 19 und 20 andererseits sind zwei Hand- oder Duschbrausen 15 dargestellt, die im Bereich ihres Brause-Griffstücks 16 einen als Brauseanschluss ausgebildeten und außenumfangsseitig mit einem Außengewinde 7 ausgestalteten Leitungsabschnitt 5 aufweisen. Die Hand- oder Duschbrausen 15 sind mit Ausnahme der unterschiedlichen Innendurchmesser im Bereich des für den Fortsatz 2 bestimmten Leitungsinnenraums 4 im wesentlichen baugleich.

Gut zu erkennen ist, dass die am Fortsatz 2 als Kopf 3 vorstehenden Flügel oder Rippen 19 derartig verformbar sind, dass der Fortsatz 2 auch in unterschiedlich dimensionierte Leitungsinnenräume 4 eingesetzt werden kann. Dabei legen sich die Flügel oder Rippen 19 mehr oder weniger stark an die Innenwände der Leitungsabschnitte 5 an.

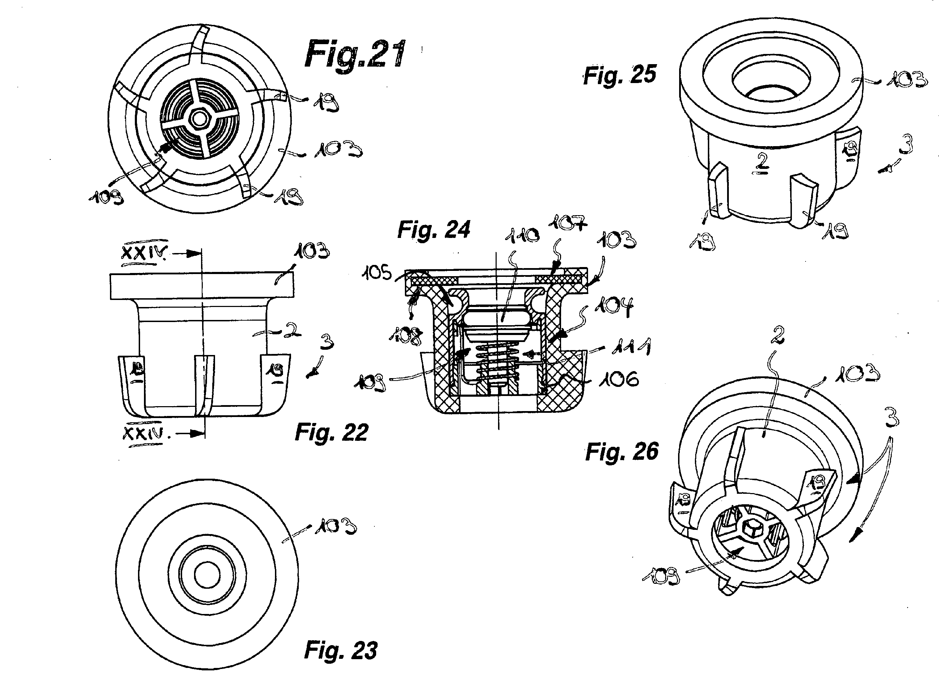

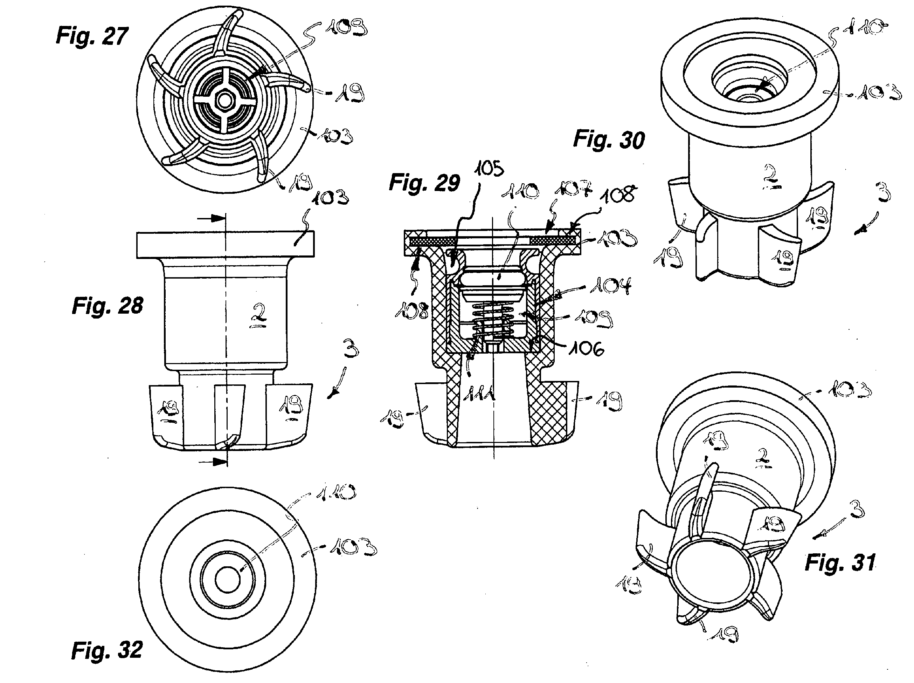

In den Figuren 21 bis 26 einerseits und den Figuren 27 bis 32 andererseits sind zwei verschiedene Ausführungen eines aus Dichtring 103, Fortsatz 2 und in den Durchtrittskanal eingesetzter Einsetzpatrone 104 bestehenden Bauteils dargestellt. Auch bei den hier dargestellten sanitären Bauteilen ist der Dichtring 103 mit einem hülsenförmigen Fortsatz 2 verbunden, der an seinem freien Endbereich einen umfangsseitig überstehenden Kopf 3 trägt. Auch der Kopf 3 dieser sanitären Bauteile ist beim Einsetzen des Fortsatzes 2 in den lichten Leitungsinnenraum 4 eines zugeordneten Leitungsabschnitts 5 derart verformbar, dass sich der Kopf 3 des Fortsatzes 2 an die den lichten Leitungsinnenraum 4 des Leitungsabschnitts 5 umgrenzende Innenumfangswandung anlegen kann. Dabei bilden auch hier der Hülseninnenraum des Fortsatzes 2 und die Ringöffnung des Dichtringes 103 einen beidseits offenen Durchtrittskanal. Damit sich der in den Leitungsinnenraum 4 eingesetzte Fortsatz 2 mit seinem Kopf 3 reibschlüssig an die Innenumfangswandung auch unterschiedlich dimensionierter Leitungsinnenräume 4 anpassen kann, wird der Kopf 3 des Fortsatzes 2 aus zumindest zwei und hier fünf voneinander beabstandeter und in Einsetzrichtung orientierter Flügel oder Rippen 19 aus elastischem Material gebildet, die sich beim Einsetzen des Fortsatzes 2 derart verbiegen können, dass sich der Kopf 3 mit seinen Flügeln oder Rippen 19 an die den lichten Leitungsinnenraum 4 des Leitungsabschnitts 5 umgrenzende Innenumfangswandung anlegt.

In den Figuren 21 bis 32 wird deutlich, dass die in dem Durchtrittskanal vorgesehene Einsetzpartrone 104 in einem als Aufnahmehöhlung 105 ausgebildeten und zur Aufnahme der Einsetzpatrone 104 bestimmten Teilbereichs des Durchtrittskanals angeordnet ist. Die Einsetzpatrone 104 kann von einer der beiden Stirnseiten und hier von der Zuströmseite aus in die Aufnahmehöhlung 105 eingesetzt werden, bis die Einsetzpatrone 104 an einem im Durchtrittskanal vorgesehenen Ringabsatz 106 oder Ringflansch anliegt. In dieser Aufnahmehöhlung 105 wird die Einsetzpatrone 104, die - wie hier - als Rückflussverhinderer ausgebildet sein beziehungsweise zusätzlich oder stattdessen auch einen Durchflussmengenregler aufweisen kann, mittels eines Sicherungsringes 107 gesichert, der in einer Ringnut 108 im Durchtrittskanal und insbesondere in der Ringöffnung des Dichtringes 103 formschlüssig gehalten ist.

Der im Durchtrittskanal vorgesehene Rückflussverhinderer 109 weist ein Ventilkörper 110 auf, welcher von dem in Durchströmrichtung des Rückflussverhinderers durchströmenden Fluid aus einer Schließstellung gegen die Rückstellkraft einer Rückstellfeder 111 in eine Offenstellung bewegbar ist. Der Ventilkörper 110 wird von einer entgegen der gewöhnlichen Durchströmrichtung fließenden Rückströmung derart gegen den Ventilsitz gepresst, dass eine gegenläufige Strömung des Fluids wirkungsvoll unterbunden ist.

Der Rückflussverhinderer 109 stellt daher beispielsweise eine Sicherung gegen rückdrückendes oder rücksaugendes kontaminiertes Wasser dar.

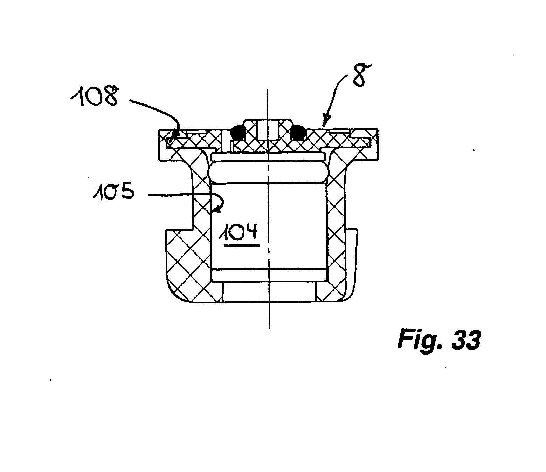

Auch bei dem in Fig. 33 gezeigten Ausführungsbeispiel ist die vorzugsweise als Rückflussverhinderer ausgebildete Einsetzpatrone 104 in einem als Aufnahmehöhlung 105 ausgebildeten und zur Aufnahme der Einsetzpatrone 104 bestimmten Teilbereich des Durchtrittskanals angeordnet. Aus einem Vergleich der Fig. 29 und 33 wird deutlich, dass bei der in Fig. 33 gezeigten Einsetzeinheit der Sicherungsring 107 durch einen scheibenförmigen Durchflussmengenregler 8 ersetzt ist, wie er beispielsweise in den Fig. 1 bis 16 näher beschrieben wurde. Der hier scheibenförmig ausgebildeten Durchflussmengenregler 8 ist in einer im Durchtrittskanal und insbesondere in der Ringöffnung des Dichtrings vorgesehenen Ringnut 108 formschlüssig gehalten.

## Patentansprüche

1. Sanitäre Einsetzeinheit, die einen Dichtring (1,101,103) mit einem hülsenförmigen Fortsatz (2) hat, welcher Fortsatz (2) an seinem freien Endbereich einen umfangsseitig überstehenden Kopf (3) trägt, der beim Einsetzen des Fortsatzes (2) in den lichten Leitungsinnenraum (4) eines dem Fortsatz (2) zugeordneten Leitungsabschnitts (5) zumindest bereichsweise derart verformbar ist, dass sich der Kopf (3) des Fortsatzes (2) an die den lichten Leitungsinnenraum (4) des Leitungsabschnitts (5) umgrenzende Innenumfangswandung anlegt und dass der Hülseninnenraum des Fortsatzes (2) und die Ringöffnung des Dichtrings (1,101,103) einen beidseits offenen Durchtrittskanal bilden.

2. Einsetzeinheit nach Anspruch 1, **dadurch gekennzeichnet, dass** sich der Kopf (3) des Fortsatzes (2) an die Innenumfangswandung reibschlüssig anlegt.

3. Einsetzeinheit nach Anspruch 1 oder 2, **dadurch gekennzeichnet, dass** der Fortsatz (2) an den Dichtring (1,101,103) einstückig angeformt ist.

4. Einsetzeinheit nach einem der Ansprüche 1 bis 3, **dadurch gekennzeichnet, dass** der Fortsatz (2) an den die Ringöffnung umgrenzenden Innenumfangsrandbereich des Dichtrings (1,101,103) einstückig angeformt ist.

5. Einsetzeinheit nach einem der Ansprüche 1 bis 4, **dadurch gekennzeichnet, dass** der Kopf (3) des Fortsatzes (2) beim Einsetzen des Fortsatzes (2) in den lichten Leitungsinnenraum im Bereich seines umfangsseitig überstehenden Kopfteilbereiches (6) verformbar ist.

6. Einsetzeinheit nach einem der Ansprüche 1 bis 5, **dadurch gekennzeichnet, dass** der Fortsatz (2) hohlnietförmig ausgestaltet ist und an seinem freien Endbereich einen umfangsseitig flanschartig überstehenden Kopf (3) aus elastischem Material trägt.

7. Einsetzeinheit nach einem der Ansprüche 1 bis 5, **dadurch gekennzeichnet, dass** der Kopf (3) durch zumindest zwei, in Umfangsrichtung voneinander beabstandete und in Einsetzrichtung orientierte Flügel oder Rippen (19) aus elastischem Material gebildet ist, die sich beim Einsetzen des Fortsatzes (2) derart verbiegen, dass sich der Kopf (3) mit seinen Flügeln oder Rippen (19) an die den lichten Leitungsinnenraum (4) des Leitungsabschnitts (5) umgrenzende Innenumfangswandung anlegt.

8. Einsetzeinheit nach Anspruch 7, **dadurch gekennzeichnet, dass** die Flügel oder Rippen (19) in Umfangsrichtung des Fortsatzes (2) vorzugsweise gleichsinnig und insbesondere schaufelradartig gebogen sind.

9. Einsetzeinheit nach einem der Ansprüche 1 bis 8, **dadurch gekennzeichnet, dass** sich der Kopf (3) in Einsetzrichtung erweitert.

10. Einsetzeinheit nach einem der Ansprüche 1 bis 9, **dadurch gekennzeichnet, dass** der Dichtring (1,101,103) zum axial dichtenden Einspannen insbesondere zwischen den Stirnrändern miteinander verbindbarer Leitungsabschnitte ausgebildet ist.

11. Einsetzeinheit nach einem der Ansprüche 1 bis 10, **dadurch gekennzeichnet, dass** im Durchtrittskanal und insbesondere in der Ringöffnung des Dichtrings (1,101,103) ein Durchflussmengenregler (8) mit zumindest einem Drosselkörper (9) aus elastisch verformbarem Material vorgesehen ist, der im Durchströmkanal (10) eines Reglergehäuses (11) angeordnet ist und zwischen sich und einer, an einer innen- oder außenumfangsseitigen Kanalwandung vorgesehenen Regelprofilierung (11) einen Steuerspalt (12) begrenzt, welcher Steuerspalt (12) in seinem lichten Durchflussquerschnitt in Folge des sich unter dem Druck des durchströmenden Mediums verformbaren Drosselkörpers (9) veränderbar ist.

12. Einsetzeinheit nach einem der Ansprüche 1 bis 11, **dadurch gekennzeichnet, dass** im Durchtrittskanal ein Rückflussverhinderer (109) mit einem Ventilkörper (110) vorgesehen ist, welcher Ventilkörper (110) von dem in Durchströmrichtung des Rückflussverhinderers (109) durchströmenden Fluid aus einer Schließstellung gegen eine Rückstellkraft in eine Offenstellung bewegbar ist.

13. Einsetzeinheit nach einem der Ansprüche 1 bis 12, **dadurch gekennzeichnet, dass** der Durchtrittskanal in einem Teilbereich als Aufnahmehöhlung (105) zur Aufnahme eines Rückflussverhinderers (109) und/oder eines Durchflussmengenreglers ausgestaltet ist.

14. Einsetzeinheit nach Anspruch 13, **dadurch gekennzeichnet, dass** der in der Aufnahmehöhlung (105) befindliche Rückflussverhinderer (109) und/oder Durchflussmengenregler in axialer Richtung mittels eines Sicherungsringes (107) oder eines Durchflussmengenreglers gesichert ist, der in der Ringöffnung des Dichtringes (103) gehalten ist.

15. Einsetzeinheit nach Anspruch 13 oder 14, **dadurch gekennzeichnet, dass** der Dichtring (103) im Bereich seiner Ringöffnung innenseitig eine Ringnut (108) trägt, in welcher der Sicherungsring (107) oder der Durchflussmengenregler (8) formschlüssig gehalten ist.

16. Sanitäre Einsetzeinheit, die einen Durchflussmengenregler (8) aufweist oder als Durchflussmengenregler ausgebildet ist, welcher Durchflussmengenregler (8) zumindest einen Drosselkörper (9) aus elastisch verformbarem Material hat, der im Durchströmkanal (10) eines Reglergehäuses (11) angeordnet ist und zwischen sich und einer, an einer innen- oder außenumfangsseitigen Kanalwandung vorgesehenen Regelprofilierung einen Steuerspalt (12) begrenzt, welcher Steuerspalt (12) in seinem lichten Durchflussquerschnitt in Folge des sich unter dem Druck des durchströmenden Mediums verformbaren Drosselkörpers (9) veränderbar ist, wobei das Reglergehäuse (11) außenumfangsseitig einen Einspannrandbereich trägt zum insbesondere dichtenden Einspannen des Durchflussmengenreglers (8) zwischen zwei miteinander verbundenen Leitungsabschnitten, insbesondere nach einem der Ansprüche 1 bis 15, **dadurch gekennzeichnet, dass** der Durchflussmengenregler (8) einen hülsenförmigen Fortsatz (2) trägt, dessen am freien Endbereich des Fortsatzes (2) umfangsseitig überstehender und aus elastischem Material hergestellter Kopf (3) beim Einsetzen oder Einführen des Fortsatzes (2) in den lichten Leitungsinnenraum (4) eines dem Fortsatz (2) zugeordneten Leitungsabschnitts (5) zumindest bereichsweise derart verformbar ist, dass sich der Kopf (3) des Fortsatzes (2) an die den lichten Leitungsinnenraum (4) des Leitungsabschnitts (5) umgrenzende Innenumfangswandung anlegt und dass der Hülseninnenraum des Fortsatzes (2) mit dem Durchströmkanal des Durchflussmengenreglers (8) verbunden ist.

17. Einsetzeinheit nach Anspruch 16, **dadurch gekennzeichnet, dass** das Reglergehäuse (11) in der Ringöffnung eines Dichtrings (1,101) angeordnet ist, dessen zu- und abströmseitige Stirnfläche den Einspannrandbereich bilden und dass der Dichtring (1,101) mit dem hülsenförmigen Fortsatz (2) einstückig verbunden ist.

18. Einsetzeinheit nach Anspruch 16 oder 17, **dadurch gekennzeichnet, dass** der hülsenförmige Fortsatz (2) sich zu seinem, den Kopf (3) tragenden freien Endbereich hin verjüngt.

19. Einsetzeinheit nach einem der Ansprüche 1 bis 18, **dadurch gekennzeichnet, dass** der Leitungsabschnitt (5) ein zu einem Brausekopf führender Bestandteil einer Brausearmatur und insbesondere einer Handbrause (15) ist.

20. Einsetzeinheit nach einem der Ansprüche 7 bis 19, **dadurch gekennzeichnet, dass** der Dichtring (1,101) als Umspritzung des Reglergehäuses (11) und der mit ihm verbundene Dichtring (1,101) als Mehrkomponenten-Spritzgussteil ausgestaltet sind.

21. Einsetzeinheit nach einem der Ansprüche 7 bis 20, **dadurch gekennzeichnet, dass** das Reglergehäuse (11) zumindest eine, vorzugsweise in Längsrichtung orientierte Durchgriffsöffnung hat, die von dem Dichtungsmaterial des Dichtringes durchsetzt ist.

22. Einsetzeinheit nach einem der Ansprüche 7 bis 21, **dadurch gekennzeichnet, dass** das Reglergehäuse (11) und der Dichtring (1,101) über Reib-, Klebe- oder Stoffschluss oder einer Auswahl dieser Verbindungsarten miteinander verbunden sind.

23. Einsetzeinheit nach einem der Ansprüche 7 bis 22, **dadurch gekennzeichnet, dass** das Reglergehäuse (11) in der Ringöffnung des Dichtrings (1), (101) lösbar verbindbar und vorzugsweise lösbar verrastbar ist.

24. Einsetzeinheit nach Anspruch 23, **dadurch gekennzeichnet, dass** an dem die Ringöffnung begrenzenden Ringinnenumfang des Dichtrings (1,101) zumindest eine Rastnut (13) oder dergleichen Rastmittel vorgesehen ist, das mit wenigstens einem Rastvorsprung (14) oder dergleichen Gegenrastmittel am Gehäuseaußenumfang des Reglergehäuses (11) lösbar verrastbar ist.

25. Einsetzeinheit nach Anspruch 23 oder 24, **dadurch gekennzeichnet, dass** das Reglergehäuse (11) von der Zuströmseite oder der Abströmseite bis zu einem radial nach innen vorstehenden Absatz (30) des Dichtringes (1,101) in dessen Ringöffnung einsetzbar ist.

26. Einsetzeinheit nach einem der Ansprüche 7 bis 25, **dadurch gekennzeichnet, dass** das Reglergehäuse (11) in der Ringöffnung des Dichtringes versenkbar ist.

27. Einsetzeinheit nach einem der Ansprüche 7 bis 26, **dadurch gekennzeichnet, dass** dem Durchflussmengenregler (8) ein Vorsatzsieb zuströmseitig vorgeschaltet ist, das mit einem in Zuströmrichtung sich vorzugsweise konisch verjüngenden Zentralbereich über die Außenkontur von Reglergehäuse (11) und Dichtring vorsteht.

## Claims

1. Sanitary insert unit comprising a sealing ring (1, 101, 103) with a sleeve-shaped projection (2), said projection (2) bearing a circumferentially protruding head (3) at a free end region thereof, said head (3), during insertion of the projection (2) into the clear line interior (4) of a line section (5) which is assigned to the projection (2), being deformable at least in regions such that the head (3) of the projection (2) bears against the inner circumferential wall which defines the clear line interior (4) of the line section (5), and that the sleeve interior of the projection (2) and the ring opening of the sealing ring (1, 101, 103) form a passage channel which is open on both sides.

2. Insert unit as claimed in claim 1, **characterised in that** the head (3) of the projection (2) bears frictionally against the inner circumferential wall.

3. Insert unit as claimed in claim 1 or 2, **characterised in that** the projection (2) is moulded integrally onto the sealing ring (1, 101, 103).

4. Insert unit as claimed inany one of claims 1 to 3, **characterised in that** the projection (2) is moulded integrally onto the inner circumferential edge region of the sealing ring (1, 101, 103) which defines the ring opening.

5. Insert unit as claimed in any one of claims 1 to 4, **characterised in that** during insertion of the projection (2) into the clear line interior, the head (3) of the projection (2) is deformable in the region of its circumferentially protruding head part region (6).

6. Insert unit as claimed inany one of claims 1 to 5, **characterised in that** the projection (2) has a hollow rivet shape and, at a free end region thereof, bears a head (3) which protrudes circumferentially in a flange-like manner and is made from elastic material.

7. Insert unit as claimed inany one of claims 1 to 5, **characterised in that** the head (3) is formed by at least two lobes or ribs (19) which are made from elastic material, are spaced apart from one another in a circumferential direction, are oriented in an inserting direction and, during insertion of the projection (2), are bent in such a way that the head (3) bears with its lobes or ribs (19) against the inner circumferential wall which defines the clear line interior (4) of the line section (5).

8. Insert unit as claimed in claim 7, **characterised in that** the lobes or ribs (19) are bent in the circumferential direction of the projection (2) preferably in the same direction and in particular in the manner of an impeller.

9. Insert unit as claimed inany one of claims 1 to 8, **characterised in that** the head (3) widens in an inserting direction.

10. Insert unit as claimed inany one of claims 1 to 9, **characterised in that** the sealing ring (1, 101, 103) is configured for being clamped-in in an axially sealing manner, in particular between the end edges of line sections which can be connected to one another.

11. Insert unit as claimed inany one of claims 1 to 10, **characterised in that** in the passage channel and in particular in the ring opening of the sealing ring (1, 101, 103), a flow regulator (8) is provided with at least one throttle body (9) made from elastically deformable material which is arranged in the throughflow channel (10) of a regulator housing (11) and delimits a control gap (12) between itself and a control profiling (11) which is provided on an inner or outer circumferential channel wall, said control gap (12) having a clear throughflow cross section which is variable as a consequence of the throttle body (9) which can be deformed under the pressure of the medium which flows therethrough.

12. Insert unit as claimed inany one of claims 1 to 11, **characterised in that** a check valve (109) with a valve body (110) is provided in the passage channel, said valve body (110) being movable by the fluid which flows through in a throughflow direction of the check valve (109) out of a closed position into an open position counter to a restoring force.

13. Insert unit as claimed inany one of claims 1 to 12, **characterised in that** the passage channel is configured in a partial region as a receiving cavity (105) for receiving a check valve (109) and/or a flow regulator.

14. Insert unit as claimed in claim 13, **characterised in that** the check valve (109) and/or flow regulator situated in the receiving cavity (105) is secured in the axial direction by means of a securing ring (107) or a flow regulator which is held in the ring opening of the sealing ring (103).

15. Insert unit as claimed in claim 13 or 14, **characterised in that** the sealing ring (103) bears an annular groove (108) on an inner side in the region of its ring opening, in which annular groove (108) the securing ring (107) or the flow regulator (8) is held in a positive-locking manner.

16. Sanitary insert unit which comprises a flow regulator (8) or is formed as a flow regulator, said flow regulator (8) having at least one throttle body (9) which is made from elastically deformable material and is arranged in the throughflow channel (10) of a regulator housing (11) and delimits a control gap (12) between itself and a control profiling which is provided on an inner or outer circumferential channel wall, said control gap (12) having a clear throughflow cross section which is variable as a consequence of the throttle body (9) which can be deformed under the pressure of the medium which flows therethrough, the regulator housing (11) bearing a clamping edge region on an outer circumferential side for clamping-in the flow regulator (8), in particular in a sealing manner, between two line sections which are connected to one another, in particular as claimed in any one of claims 1 to 15, **characterised in that** the flow regulator (8) bears a sleeve-shaped projection (2), the head (3) of which, which protrudes circumferentially at the free end region of the projection (2) and is produced from elastic material, is deformable at least in regions during insertion or introduction of the projection (2) into the clear line interior (4) of a line section (5) which is assigned to the projection (2), in such a way that the head (3) of the projection (2) bears against the inner circumferential wall which defines the clear line interior (4) of the line section (5), and **in that** the sleeve interior of the projection (2) is connected to the throughflow channel of the flow regulator (8).

17. Insert unit as claimed in claim 16, **characterised in that** the regulator housing (11) is arranged in the ring opening of a sealing ring (1, 101), an inflow-side end face and an outflow-side end face of which form the clamping edge region, and **in that** the sealing ring (1, 101) is connected integrally to the sleeve-shaped projection (2).

18. Insert unit as claimed in claim 16 or 17, **characterised in that** the sleeve-shaped projection (2) tapers towards a free end region thereof which bears the head (3).

19. Insert unit as claimed inany one of claims 1 to 18, **characterised in that** the line section (5) is a constituent part of a shower fitting that leads to a shower head, in particular a hand shower (15).

20. Insert unit as claimed inany one of claims 7 to 19, **characterised in that** the sealing ring (1, 101) is configured as an injection-moulded encapsulation of the regulator housing (11) and the sealing ring (1, 101) connected thereto is configured as a multiple-component injection-moulded part.

21. Insert unit as claimed inany one of claims 7 to 20, **characterised in that** the regulator housing (11) has at least one through-passage opening which is preferably oriented in a longitudinal direction and is penetrated by the sealing material of the sealing ring.

22. Insert unit as claimed inany one of claims 7 to 21, **characterised in that** the regulator housing (11) and the sealing ring (1, 101) are connected to one another via a frictional connection, adhesive bond or material-to-material connection or a selection of these types of connection.

23. Insert unit as claimed inany one of claims 7 to 22, **characterised in that** the regulator housing (11) can be releasably connected, and preferably can be releasably latched, in the ring opening of the sealing ring (1), (101).

24. Insert unit as claimed in claim 23, **characterised in that** at least one latching groove (13) or similar latching means is provided on the ring inner circumference of the sealing ring (1, 101) which delimits the ring opening, said latching means (13) being releasably latchable to at least one latching projection (14) or similar counter-latching means on a housing outer circumference of the regulator housing (11).

25. Insert unit as claimed in claim 23 or 24, **characterised in that** the regulator housing (11) is insertable into the ring opening of the sealing ring (1, 101) from the inflow side or the outflow side as far as a radially inwardly projecting shoulder (30) of the sealing ring.

26. Insert unit as claimed inany one of claims 7 to 25, **characterised in that** the regulator housing (11) can be sunk into the ring opening of the sealing ring.

27. Insert unit as claimed inany one of claims 7 to 26, **characterised in that** an attachment screen is connected upstream of the flow regulator (8)on the inflow side, said attachment screen projecting with a central region, which tapers preferably conically in the inflow direction, beyond the outer contour of the regulator housing (11) and sealing ring.

## Revendications

1. Unité d'insertion sanitaire, pourvue d'une bague d'étanchéité (1, 101, 103) avec une extension (2) en forme de douille, ladite extension (2) portant à son extrémité libre une tête (3) périphériquement saillante, laquelle est au moins partiellement déformable lors de l'insertion de l'extension (2) dans l'espace intérieur (4) d'un tronçon de tuyau (5) associé à l'extension (2), de telle manière que la tête (3) de l'extension (2) s'applique contre la paroi périphérique intérieure entourant l'espace intérieur (4) du tronçon de tuyau (5), et que l'intérieur en douille de l'extension (2) et l'ouverture de la bague d'étanchéité (1, 101, 103) forment un canal de passage ouvert sur les deux côtés.

2. Unité d'insertion selon la revendication 1, **caractérisée en ce que** la tête (3) de l'extension (2) s'applique par friction contre la paroi périphérique intérieure.

3. Unité d'insertion selon la revendication 1 ou 2, **caractérisée en ce que** l'extension (2) est formée d'un seul tenant sur la bague d'étanchéité (1, 101, 103) .

4. Unité d'insertion selon l'une des revendications 1 à 3, **caractérisée en ce que** l'extension (2) est formée d'un seul tenant sur la zone de bord périphérique intérieur entourant l'ouverture de la bague d'étanchéité (1, 101, 103).

5. Unité d'insertion selon l'une des revendications 1 à 4, **caractérisée en ce que** la tête (3) de l'extension (2) est déformable au niveau de sa partie de tête (6) périphériquement saillante lors de l'insertion de l'extension (2) dans l'espace intérieur de tuyau.

6. Unité d'insertion selon l'une des revendications 1 à 5, **caractérisée en ce que** l'extension (2) est réalisée avec une forme de rivet creux et porte à son extrémité libre une tête (3) en matériau élastique périphériquement saillante à la manière d'une bride.

7. Unité d'insertion selon l'une des revendications 1 à 5, **caractérisée en ce que** la tête (3) est formée par au moins deux ailettes ou nervures (19) en matériau élastique, espacées l'une de l'autre en direction périphérique et orientées en direction d'insertion, lesquelles se plient lors de l'insertion de l'extension (2), de telle manière que la tête (3) s'applique par ses ailettes ou nervures (19) contre la paroi périphérique intérieure entourant l'intérieur (4) du tronçon de tuyau (5).

8. Unité d'insertion selon la revendication 7, **caractérisée en ce que** les ailettes ou nervures (19) sont préférentiellement pliées dans le même sens, et en particulier à la manière de pales dans la direction périphérique de l'extension (2).

9. Unité d'insertion selon l'une des revendications 1 à 8, **caractérisée en ce que** la tête (3) s'évase dans la direction d'insertion.

10. Unité d'insertion selon l'une des revendications 1 à 9, **caractérisée en ce que** la bague d'étanchéité (1, 101, 103) est réalisée pour un serrage axial étanche, en particulier entre les bords frontaux de tronçons de tuyau raccordables l'un à l'autre.

11. Unité d'insertion selon l'une des revendications 1 à 10, **caractérisée en ce qu'**un régulateur de débit (8) avec au moins un corps d'étranglement (9) en matériau élastiquement déformable est prévu dans le canal de passage et en particulier dans l'ouverture de la bague d'étanchéité (1, 101, 103), est disposé dans le canal d'écoulement (10) d'un boîtier de régulateur (11), et délimite une fente de commande (12) entre lui et un profilé de régulation (11) prévu sur une paroi de canal intérieurement ou extérieurement périphérique, la section d'écoulement libre de ladite fente de commande (12) pouvant être variée du fait de la déformabilité du corps d'étranglement (9) sous la pression du fluide qui s'écoule.

12. Unité d'insertion selon l'une des revendications 1 à 11, **caractérisée en ce qu'**un clapet de non-retour (109) avec un corps de vanne (110) est prévu dans le canal de passage, ledit corps de vanne (110) pouvant être déplacé contre une force de rappel par le fluide s'écoulant dans la direction de flux du clapet de non-retour (109), d'une position de fermeture vers une position d'ouverture.

13. Unité d'insertion selon l'une des revendications 1 à 12, **caractérisée en ce que** le canal de passage est réalisé en partie comme cavité de réception (105) pour le logement d'un clapet de non-retour (109) et/ou d'un régulateur de débit.

14. Unité d'insertion selon la revendication 13, **caractérisée en ce que** le clapet de non-retour (109) et/ou le régulateur de débit se trouvant dans la cavité de réception (105) sont fixés en direction axiale au moyen d'une bague de fixation (107) ou d'un régulateur de débit maintenus dans l'ouverture de la bague d'étanchéité (103).

15. Unité d'insertion selon la revendication 13 ou 14, **caractérisée en ce que** la bague d'étanchéité (103) est pourvue d'une rainure annulaire (108) intérieure au niveau de son ouverture de bague, dans laquelle la bague de fixation (107) ou le régulateur de débit (8) sont maintenus par engagement positif.

16. Unité d'insertion sanitaire pourvue d'un régulateur de débit (8) ou réalisée comme régulateur de débit, ledit régulateur de débit (8) ayant au moins un corps d'étranglement (9) en matériau élastiquement déformable, disposé dans le canal d'écoulement (10) d'un boîtier de régulateur (11) et délimitant une fente de commande (12) entre lui et un profilé de régulation prévu sur une paroi de canal intérieurement ou extérieurement périphérique, la section d'écoulement libre de ladite fente de commande (12) pouvant être variée du fait de la déformabilité du corps d'étranglement (9) sous la pression du fluide qui s'écoule, le boîtier de régulateur (11) présentant sur sa périphérie extérieure une zone de bord de serrage destinée en particulier au serrage étanche du régulateur de débit (8) entre deux tronçons de tuyau raccordés l'un à l'autre, en particulier selon l'une des revendications 1 à 15, **caractérisée en ce que** le régulateur de débit (8) présente une extension (2) en forme de douille, dont la tête (3) périphériquement saillante à l'extrémité libre de ladite extension (2) et fabriquée en matériau élastique au moins partiellement déformable lors de la mise en place ou de l'insertion de l'extension (2) dans l'espace intérieur (4) d'un tronçon de tuyau (5) associé à l'extension (2), de telle manière que la tête (3) de l'extension (2) s'applique contre la paroi périphérique intérieure entourant l'espace intérieur (4) du tronçon de tuyau (5), et que l'intérieur en douille de l'extension (2) soit raccordé au canal d'écoulement du régulateur de débit (8).

17. Unité d'insertion selon la revendication 16, **caractérisée en ce que** le boîtier de régulateur (11) est disposé dans l'ouverture d'une bague d'étanchéité (1, 101) dont les faces frontales côtés entrée et sortie de flux forment la zone de bord de serrage, et **en ce que** la bague d'étanchéité (1, 101) est raccordée d'un seul tenant à l'extension (2) en forme de douille.

18. Unité d'insertion selon la revendication 16 ou 17, **caractérisée en ce que** l'extension (2) en forme de douille se rétrécit vers son extrémité libre portant la tête (3).

19. Unité d'insertion selon l'une des revendications 1 à 18, **caractérisée en ce que** le tronçon de tuyau (5) est un composant d'une douche, et en particulier d'une douchette (15) menant à une pomme de douche.

20. Unité d'insertion selon l'une des revendications 7 à 19, **caractérisée en ce que** la bague d'étanchéité (1, 101) est réalisée comme surmoulage du boîtier de régulateur (11) et la bague d'étanchéité (1, 101) qui lui est raccordée comme pièce moulée par injection à plusieurs composants.

21. Unité d'insertion selon l'une des revendications 7 à 20, **caractérisée en ce que** le boîtier de régulateur (11) présente au moins une ouverture de saisie, préférentiellement orientée dans le sens de la longueur, et que traverse le matériau d'étanchéité de la bague d'étanchéité.

22. Unité d'insertion selon l'une des revendications 7 à 21, **caractérisée en ce que** le boîtier de régulateur (11) et la bague d'étanchéité (1, 101) sont raccordés l'un à l'autre par connexion à friction, par adhérence ou par liaison de matière, ou par une sélection de ces types de connexion.

23. Unité d'insertion selon l'une des revendications 7 à 22, **caractérisée en ce que** le boîtier de régulateur (11) peut être raccordé de manière amovible, et est préférentiellement enclenchable de manière amovible dans l'ouverture de la bague d'étanchéité (1), (101).

24. Unité d'insertion selon la revendication 23, **caractérisée en ce qu'**au moins une rainure d'enclenchement (13), ou un moyen d'enclenchement similaire est prévu sur la périphérie intérieure de la bague d'étanchéité (1, 101) délimitant l'ouverture de bague, lequel est enclenchable de manière amovible avec au moins une saillie d'enclenchement (14) ou un moyen d'enclenchement opposé sur la périphérie extérieure du boîtier de régulateur (11).

25. Unité d'insertion selon la revendication 23 ou 24, **caractérisée en ce que** le boîtier de régulateur (11) peut être mis en place dans l'ouverture de la bague d'étanchéité (1, 101) par le côté entrée ou sortie de flux, jusqu'à un épaulement (30) saillant radialement vers l'intérieur de la bague d'étanchéité.

26. Unité d'insertion selon l'une des revendications 7 à 25, **caractérisée en ce que** le boîtier de régulateur (11) peut être logé dans l'ouverture de la bague d'étanchéité.

27. Unité d'insertion selon l'une des revendications 7 à 26, **caractérisée en ce qu'**un filtre d'entrée est monté en amont du régulateur de débit (8) côté entrée de flux, lequel dépasse du contour extérieur du boîtier de régulateur (11) et de la bague d'étanchéité par une partie centrale qui se rétrécit de préférence coniquement dans la direction de flux.
